# EUROPEAN PATENT APPLICATION

(11) **EP 3 660 773 A1**
(43) Date of publication of application: **03.06.2020**
(21) Application number: 19198685.0
(22) Date of filing: 20.09.2019
(51) Int. Cl.: G06Q 30/02

(54) **INFORMATION PROCESSING APPARATUS AND INFORMATION PROCESSING METHOD**

(30) Priority: 27.11.2018 JP 2018221506
(71) Applicant: Toshiba Tec Kabushiki Kaisha, 141-8562 Tokyo (JP)
(72) Inventor: ISHIKAWA, Seiji, Shinagawa-ku,, Tokyo 141-8562 (JP)
(74) Representative: Bandpay & Greuter

(57) **Abstract**

According to an embodiment, an information processing apparatus includes a processor and a memory. A customer master data section of the memory stores attribute information about a customer. The processor extracts customer specific information specifying the customer satisfying participation conditions for each piece of plan specific information.

## Description

### FIELD

An embodiment described here generally relates to an information processing apparatus and an information processing method.

### BACKGROUND

In the related art, companies holding shops such as supermarkets and convenience stores, for example, plan a variety of sales promotion plans for promoting sales in the shops. The planned sales promotion plans are stored in headquarters servers of the companies and shop servers of the shops, for example, and are executed at the headquarters servers, the shop servers, POS (Point of Sales) terminals, or the like. Bonuses are offered to customers satisfying participation conditions for the sales promotion plans. Examples of the bonuses include offering points, distributing coupons, discounting or reducing a product price, and the like, for example. Offering points is executed by the headquarters server and the shop servers and distributing coupons and discounting or reducing the product price are executed by the POS terminals.

Such sales promotion plans are often planned for a certain period (for example, for one month). Accordingly, when the sales promotion period is ended, next sales promotion plan is set every time, even if the next sales promotion plan is a similar plan.

### SUMMARY OF INVENTION

To solve such problem, there is provided an information processing apparatus that manages a sales promotion plan about a product and provides an external device with information about the sales promotion plan, comprising:
a communication device configured to communicate with the external device in order to provide the external device with the information about the sales promotion plan;
a memory including
   a customer master data section that stores attribute information showing a customer attribute in association with customer specific information specifying the customer,
   a customer purchase data section that stores purchase price information showing a purchase price of the product purchased by the customer in association with the customer specific information, and
   a condition data section that stores attribute condition information showing a condition of the customer attribute and purchase price condition information showing a condition of the purchase price of the customer in association with each piece of plan specific information specifying a plurality of the sales promotion plans as participation conditions of the customer for the plurality of sales promotion plans; and
a processor configured to
   searche the condition data section on a basis of the attribute information about the customer stored in the customer master data section and the purchase price information about the customer stored in the customer purchase data section,
   extract the customer specific information specifying the customer satisfying the participation conditions from the customer master data section for each piece of the plan specific information on a basis of a search result, and
   transmit the extracted customer specific information and the extracted plan specific information to the external device in association with each other via the communication device.

Preferably, the customer master data section stores information about a customer's age as the attribute information about the customer in association with the customer specific information, and
the condition data section stores the information about a customer's age group as the attribute condition information in association with the plan specific information.

Preferably still, the processor is configured to transmit the customer specific information and the plan specific information to the external device such that information showing a bonus relating to the sales promotion plan offered to the customer is printable on a receipt on which the information about the product purchased by the customer is printed by the external device.

Preferably yet, the communication device is further capable of communicating with an information terminal owned by the customer, and
the processor is configured to transmit the customer specific information (customer code) and the plan specific information (plan code) to the information terminal via the communication device such that information showing a bonus relating to the sales promotion plan offered to the customer is displayable on the information terminal.

Suitably, the processor is configured not to transmit the customer specific information and the plan specific information to the external device in a case where the bonus has been offered to the customer.

The invention also relates to an information processing method for an information processing apparatus that manages a sales promotion plan about a product and provides an external device with information about the sales promotion plan, comprising:
storing attribute information showing a customer attribute in a customer master data section of a memory in association with customer specific information specifying the customer;
storing purchase price information showing a purchase price of the product purchased by the customer in a customer purchase data section of the memory in association with the customer specific information;
storing attribute condition information showing a condition of the customer attribute and purchase price condition information showing a condition of the purchase price of the customer in a condition data section of the memory in association with each piece of plan specific information specifying a plurality of the sales promotion plans as participation conditions of the customer for a plurality of the sales promotion plans;
searching the condition data section on a basis of the attribute information about the customer stored in the customer master data section and the purchase price information about the customer stored in the customer purchase data section;
extracting the customer specific information specifying the customer satisfying the participation conditions from the customer master data section for each piece of the plan specific information on a basis of a result of the searching; and
transmitting the extracted customer specific information and the extracted plan specific information to the external device in association with each other via the communication device.

Preferably, storing the attribute information includes storing information about a customer's age as the attribute information about the customer in association with the customer specific information, and
storing the attribute condition information includes storing the information about a customer's age group as the attribute condition information in association with the plan specific information.

Preferably still, transmitting the extracted customer specific information and the extracted plan specific information includes transmitting the customer specific information and the plan specific information to the external device such that information showing a bonus relating to the sales promotion plan offered to the customer is printable on a receipt on which the information about the product purchased by the customer is printed by the external device.

Preferably yet, transmitting the extracted customer specific information and the extracted plan specific information includes transmitting the customer specific information (customer code) and the plan specific information (plan code) to an information terminal owned by the customer such that information showing a bonus relating to the sales promotion plan offered to the customer is displayable on the information terminal.

Suitably, transmitting the extracted customer specific information and the extracted plan specific information includes not transmitting the customer specific information and the plan specific information to the external device in a case where the bonus has been offered to the customer.

The invention also concerns a computer program comprising instructions which, when the program is executed by a computer, cause the computer to carry out the steps of the method described above.

The invention further relates to a computer-readable medium having stored thereon the computer program above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram showing an information processing system according to an embodiment.
Fig. 2 is a block diagram showing a hardware configuration of a headquarters server according to the embodiment.
Fig. 3 is a diagram showing a memory configuration of a customer master data section according to the embodiment.
Fig. 4 is a diagram showing a memory configuration of a customer purchase data section according to the embodiment.
Fig. 5 is a diagram showing a memory configuration of a sales plan data section according to the embodiment.
Fig. 6 is a diagram showing a memory configuration of a condition data section according to the embodiment.
Fig. 7 is a diagram showing a memory configuration of a target customer data section according to the embodiment.
Fig. 8 is a block diagram showing a hardware configuration of a POS terminal according to the embodiment.
Fig. 9 is a diagram showing a memory configuration of a plan data section of the POS terminal according to the embodiment.
Fig. 10 is a diagram showing a memory configuration of a plan code section according to the embodiment.
Fig. 11 is a function block diagram showing a function configuration of the headquarters server according to the embodiment.
Fig. 12 is a flowchart showing control processing of the headquarters server according to the embodiment.
Fig. 13 is a flowchart showing control processing of the POS terminal according to the embodiment.
Fig. 14 is a diagram showing a printed example of a receipt issued from the POS terminal according to the embodiment.

### DETAILED DESCRIPTION

In accordance with one embodiment, an information processing apparatus manages a sales promotion plan about a product and provides an external device with information about the sales promotion plan. The information processing apparatus includes a communication device, a memory, and a processor. The communication device communicates with the external device in order to provide the external device with the information about the sales promotion plan. The memory includes a customer master data section, a customer purchase data section, and a condition data section. The customer master data section stores attribute information showing a customer attribute in association with customer specific information specifying the customer. The customer purchase data section stores purchase price information showing a purchase price of the product purchased by the customer in association with the customer specific information. The condition data section stores attribute condition information showing a condition of the customer attribute and purchase price condition information showing a condition of the purchase price of the customer in association with each piece of plan specific information specifying a plurality of the sales promotion plans as participation conditions of the customer for the plurality of sales promotion plans. The processor searches the condition data section on the basis of the attribute information stored in the customer master data section and the purchase price information stored in the customer purchase data section. The processor extracts the customer specific information specifying the customer satisfying the participation conditions from the customer master data section for each piece of plan specific information on the basis of a search result. Furthermore, the processor transmits the extracted customer specific information and the extracted plan specific information to the external device in association with each other via the communication device.

Hereinafter, embodiments will be described with reference to the drawings. In the drawings, identical symbols denote identical or similar parts. In the embodiment, a headquarters server will be described as an example of the information processing apparatus. In addition, offering points will be described as an example of offering the bonuses. Note that the embodiments are not limited to the following description.

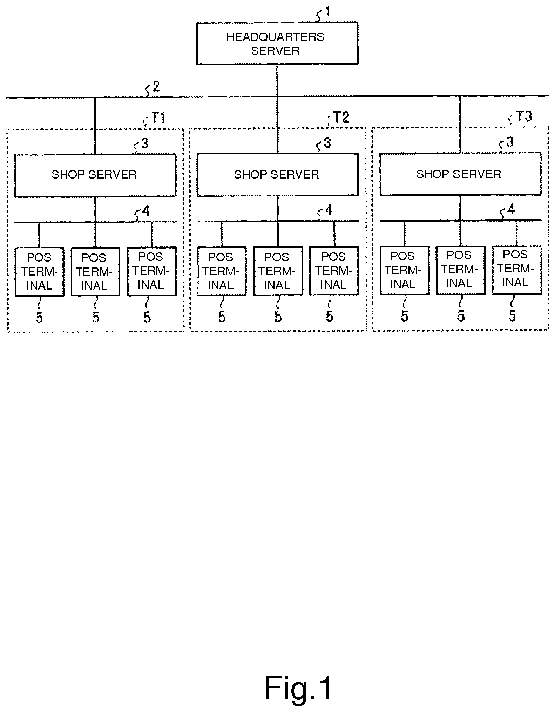

Fig. 1 is a diagram showing an information processing system according to an embodiment. As shown in Fig. 1, the information processing system includes a headquarters server 1, shop servers 3, and POS terminals 5. The headquarters server 1 is located at headquarters of a company that administers shops. The headquarters server 1 manages sales promotion plans about products and provides the shop servers 3 as external devices with information about the sales promotion plans. The shop servers 3 are located at respective shops T operated by the company. According to the embodiment, three shops of a shop T1, a shop T2, and a shop T3 are illustrated. A plurality of the POS terminals 5 is located at each shop. The headquarters server 1 and the shop servers 3 are connected via a communication line 2 such as a LAN (Local Area Network) so as to be capable of communicating with each other. The shop servers 3 and the plurality of the POS terminals 5 in the respective shops are connected via communication lines 4 such as the LAN so as to be capable of communicating with each other. Note that the three POS terminals 5 are located at each shop in the embodiment of Fig. 1, but there may be one or more POS terminals 5.

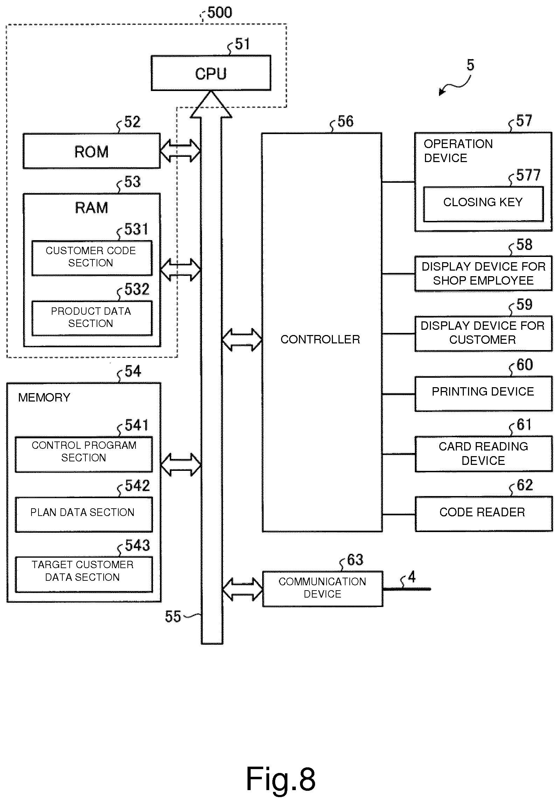

The POS terminal 5 executes sales registration processing and payment processing of products to be sold for customers at the shop. The sales registration processing includes acquiring a product code that specifies a product by optically reading a code symbol such as a bar code attached to the product to be sold or imaging the product or the code symbol. In addition, the sales registration processing displays product information (product name, product price, etc.) about the product on the basis of the acquired product code. Furthermore, the sales registration processing includes processing of storing involved product information on a product data section 532 (see Fig. 8) or the like as well as displaying. The payment processing includes calculating a total amount of a purchase price of the customer involved in an involved transaction and displaying the total amount of the purchase price on the basis of the product information stored in the product data section 532. Furthermore, the payment processing includes processing of calculating and displaying a change amount to be given to the customer on the basis of a deposit of the purchase price of the product from the customer. Moreover, the payment processing includes processing of issuing a receipt on which the product information and payment information are printed, and the like. The payment information includes a total price of the purchase price, a deposit amount, the change amount, or the like.

The shop server 3 accumulates the product information about the products to which the payment processing is done by the respective POS terminals 5 in the shop and sales information at the respective POS terminals. Then, the shop server 3 manages an accumulated result as the sales information about the shop. In addition, the shop server 3 transmits the sales information collected from each POS terminal 5 to the headquarters server 1. Furthermore, the shop server 3 transmits a variety of pieces of information received from the headquarters server 1 to each POS terminal 5.

The headquarters server 1 receives the sales information about the shop from each shop server 3, and collects and manages the received sales information. In addition, the headquarters server 1 stores contents of a variety of sales promotion plans created. The sales promotion plans include a plan common to all shops as well as a plan for a specific shop. The headquarters server 1 transmits the contents of the sales promotion plans to each shop server 3. The shop server 3 transmits the contents of the received sales promotion plans to each POS terminal 5. The POS terminal 5 stores the contents of the sales promotion plans received from the shop server 3. In addition, if a sales promotion period of the sales promotion plan elapses, the headquarters server 1 transmits contents of next sales promotion plan to each shop server 3.

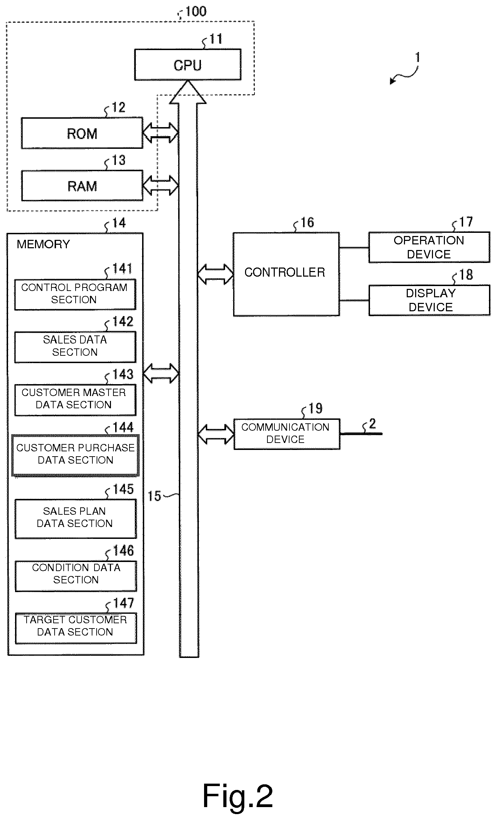

From here, hardware of the headquarters server 1 will be described. Fig. 2 is a block diagram showing a hardware configuration of the headquarters server 1. As shown in Fig. 2, the headquarters server 1 includes a processor 100. The processor 100 includes a CPU (Central Processing Unit) 11, a ROM (Read Only Memory) 12, a RAM (Random Access Memory) 13, a memory 14, and the like. The CPU 11 is a control main body. The ROM 12 stores a variety of control programs. The RAM 13 stores an expanded program and a variety of pieces of data. The memory 14 stores a variety of control programs and pieces of information. The CPU 11, the ROM 12, the RAM 13, and the memory 14 are connected each other via a bus 15. The CPU 11 expands a control program stored in the ROM 12 or in the memory 14 to the RAM 13. The CPU 11 operates in accordance with the expanded control program to execute control processing of the headquarters server 1, as described later. Note that all or a part of the control program and information stored in the memory 14 may be stored in the ROM 12. In this case, the ROM 12 functions as the memory 14.

The memory 14 includes a non-volatile memory that holds stored information even if it is turned off such as an HDD (Hard Disc Drive) and a flash memory. The memory 14 includes a control program section 141, a sales data section 142, a customer master data section 143, a customer purchase data section 144, a sales plan data section 145, a condition data section 146, and a target customer data section 147.

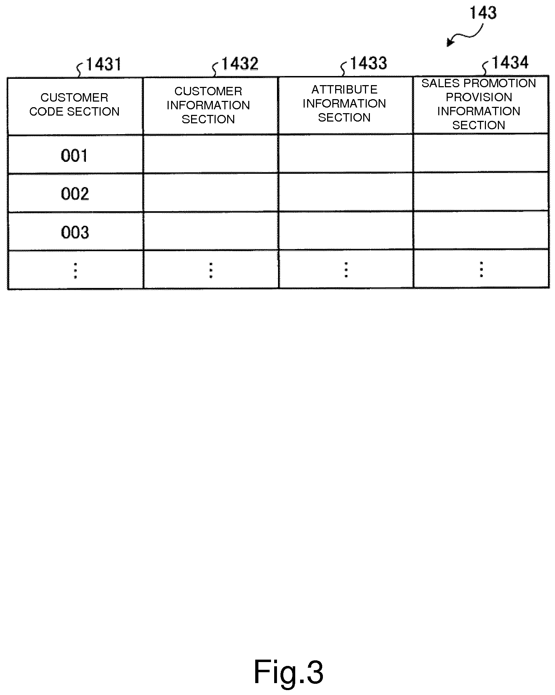

The control program section 141 stores a control program that controls the headquarters server 1. The sales data section 142 stores sales information about each shop collected from each shop server 3. The customer master data section 143, the customer purchase data section 144, the sales plan data section 145, the condition data section 146, and the target customer data section 147 will be described below with reference to Fig. 3 to Fig. 7.

In addition, the processor 100 is connected to an operation device 17 and a display device 18 via the bus 15 and a controller 16. The operation device 17 is a keyboard on which a variety of keys are arranged. The display device 18 displays a variety of pieces of information to an operator. Note that the controller 16 receives an instruction from the processor 100 and controls the operation device 17 and the display device 18. Incidentally, as a matter of description convenience, it describes that control performed by the controller 16 is performed by the processor 100.

In addition, the processor 100 is connected to a communication device 19 via the bus 15. The communication device 19 is connected to each shop server 3 of each shop as the external devices via the communication line 2 so as to be capable of communicating with each other. The communication device 19 communicates with each shop server 3 in order to provide the external devices with information about the sales promotion plan. In addition, the communication device 19 is capable of communicating with an information terminal owned by the customer.

Next, the customer master data section 143 will be described. The customer master data section 143 stores a variety of pieces of information about the customers registered as members. Fig. 3 shows a memory configuration of the customer master data section 143. As shown in Fig. 3, the customer master data section 143 includes a customer code section 1431, a customer information section 1432, an attribute information section 1433, and a sales promotion provision information section 1434. The customer code section 1431 stores a customer code. The customer code is customer specific information that specifies the customer. The customer information section 1432 stores a variety of pieces of information about the involved customer in association with the customer code. The variety of pieces of information about the involved customer includes a customer name, an address, a phone number, a family structure, and the like, for example. The attribute information section 1433 stores attribute information about the involved customer in association with the customer code. The attribute information about the involved customer includes a sex, a birthday, an age, and the like, for example. The sales promotion provision information section 1434 stores information (e.g., flag information) about a bonus relating to the sales promotion plan offered to the involved customer in association with the customer code within the sales promotion period by each sales promotion plan. For example, in a case where the bonus relating to the sales promotion plan has been offered to the involved customer within the sales promotion period, a flag 1 is stored in the sales promotion provision information section 1434 in association with a plan code that specifies the involved sales promotion plan. In a case where the bonus corresponding to the sales promotion plan is not yet offered to the involved customer within the sales promotion period, a flag 0 is stored in the sales promotion provision information section 1434 in association with the plan code that specifies the involved sales promotion plan.

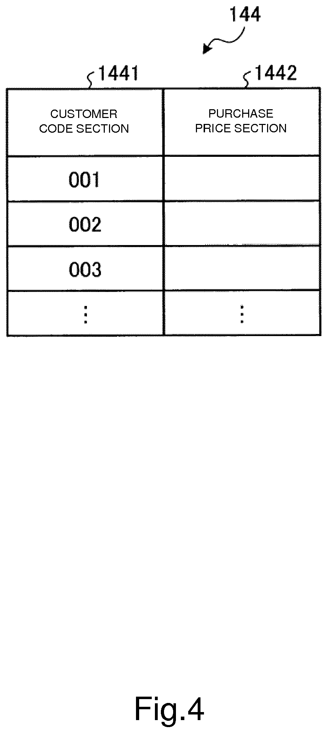

Next, the customer purchase data section 144 will be described. The customer purchase data section 144 stores a total price (total price of purchase price) of the products purchased by a customer within the sales promotion period (for example, within 1 month). Fig. 4 shows a memory configuration of the customer purchase data section 144. As shown in Fig. 4, the customer purchase data section 144 includes a customer code section 1441 and a purchase price section 1442. The customer code section 1441 stores the customer code that specifies the customer. The purchase price section 1442 stores purchase price information in association with the customer code. The purchase price information includes data about the total price of the purchase price within the sales promotion period by the involved customer. Hereinafter, the purchase price information may be referred to as the total price of the purchase price. Even if the same customer purchases the products at any shop T of the shop T1, the shop T2, and the shop T3 in Fig. 1, for example, the purchase price section 1442 stores the total price of the purchase price at all the shops T.

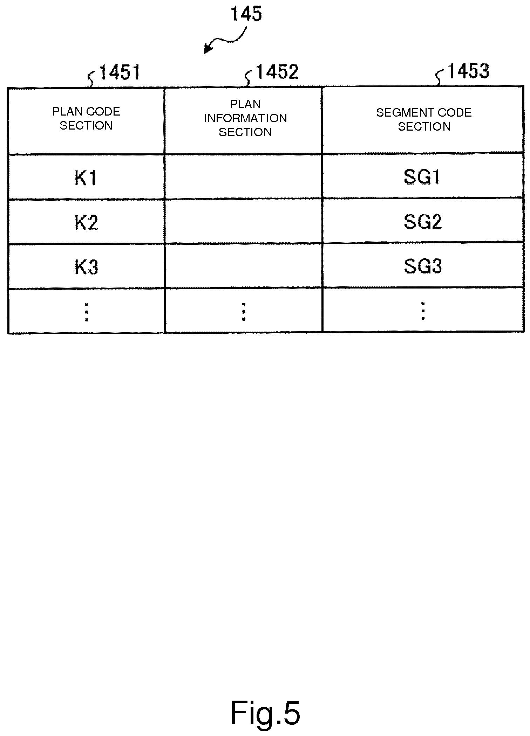

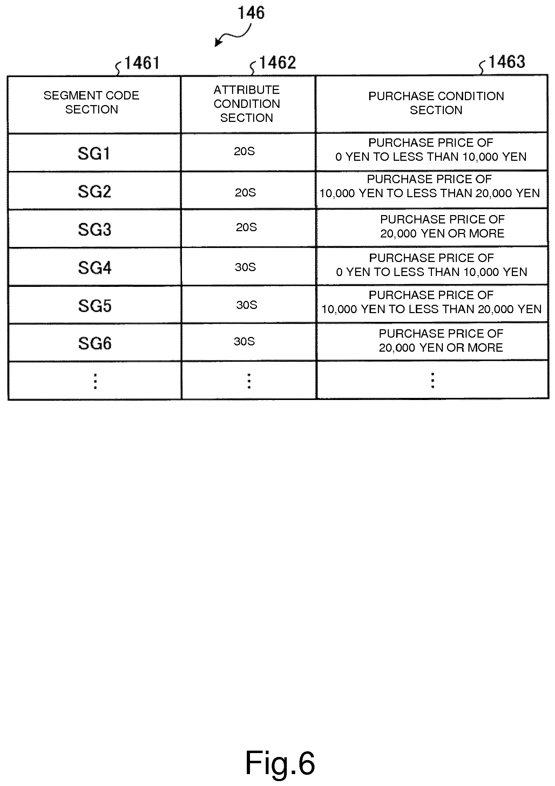

Next, the sales plan data section 145 will be described. The sales plan data section 145 stores the contents of the involved sales promotion plan for each sales promotion plan. Fig. 5 shows a memory configuration of the sales plan data section 145. As shown in Fig. 5, the sales plan data section 145 includes a plan code section 1451, a plan information section 1452, and a segment code section 1453. The plan code section 1451 stores the plan code. The plan code is plan specific information that specifies the sales promotion plan. The plan information section 1452 stores the contents of the sales promotion plan shown by the involved plan code in association with the plan code. The contents of the sales promotion plan are pieces of the sales promotion information including the information about the bonus offered to the customer, for example. The information about the bonus includes the number of points offered to the customer, for example. The segment code section 1453 stores a segment code. The segment code is information that specifies a segment (customer group) satisfying participation conditions for the sales promotion plan. The segment code and the participation conditions of the corresponding customer will be described with reference to Fig. 6.

Next, the condition data section 146 will be described. The condition data section 146 stores attribute condition information and purchase price condition information in association with each of a plurality of plan codes (plan specific information) as the participation conditions of the customer for a plurality of the sales promotion plans. Specifically, the condition data section 146 stores the participation conditions to be satisfied by the customer corresponding to the involved segment code by each above-described segment code. The customer satisfying the participation conditions is included in the segment (customer group) corresponded to the involved segment code. Fig. 6 shows a memory configuration of the condition data section 146. As shown in Fig. 6, the condition data section 146 includes a segment code section 1461, an attribute condition section 1462, and a purchase condition section 1463. The segment code section 1461 stores the segment code that specifies the segment. The attribute condition section 1462 stores the attribute condition information as one of the participation conditions corresponded to the involved segment for each segment code. The attribute condition information is information showing a condition for an age group of a customer's age (e.g., 20s, 30s), for example. The purchase condition section 1463 stores the purchase price condition information as another of the participation conditions for each segment code. The purchase price condition information is information showing the conditions for the total price of the purchase price within the sales promotion period. For example, in Fig. 6, the participation conditions of the customer of which the segment code is included in a segment SG1 are that the age group of the age is 20s and the total price of the purchase price is less than 10,000 yen (price width of 0 yen to less than 10,000 yen) within the sales promotion period. In addition, for example, the participation conditions of the customer of which the segment code is included in a segment SG2 are that the age group of the age is 20s and the total price of the purchase price is from 10,000 yen to less than 20,000 yen (price width of 10,000 yen to less than 20,000 yen) within the sales promotion period. Thus, the segment of the involved customer is determined on the basis of the age group of the customer's age and the total price of the purchase price within the sales promotion period.

In the embodiment, the information about the age group of the customer's age is used as an example of the attribute condition information. It should be appreciated that a sex, a residential area, duration of residence, etc. may be used other than the age group of the age. In addition, in the embodiment, the participation conditions are set for each segment code. However, as shown in Fig. 5, since the segment code and the plan code have a correspondence relationship, the plan code and the participation conditions have a correspondence relationship. In other words, the participation conditions are stored for each sales promotion plan from the information stored in the sales plan data section 145 and the information stored in the condition data section 146.

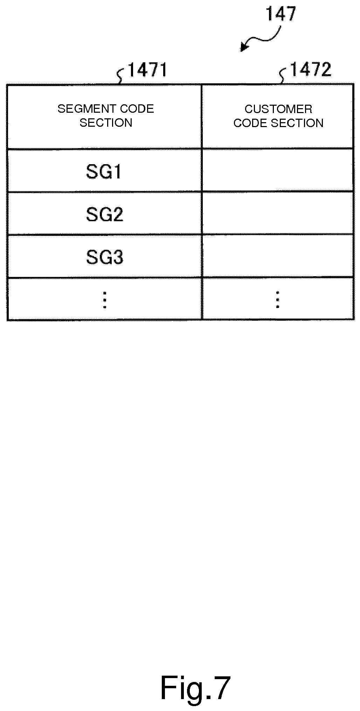

Next, the target customer data section 147 will be described. The target customer data section 147 stores the customer code that specifies the customer satisfying the participation conditions for each segment code. Fig. 7 shows a memory configuration of the target customer data section 147. As shown in Fig. 7, the target customer data section 147 has a segment code section 1471 and a customer code section 1472. The segment code section 1471 stores the segment code that specifies the segment. The customer code section 1472 stores the customer code of the customer belonging to the involved segment for each segment code. Specifically, the segment with which the involved customer satisfies the participation conditions is determined on the basis of the participation conditions for which it belongs to the involved segment by each segment stored in the condition data section 146, the attribute information (attribute information showing age) of the customer stored in the attribute information section 1433, and the purchase price information (total price of purchase price) of the involved customer for the sales promotion period stored in the purchase price section 1442. Then, the customer code that specifies the involved customer is stored in the customer code section 1472 in association with the determined segment. Note that the customer codes of a plurality of customers may be stored in the customer code section 1472 corresponding to one segment code.

Note that, one sales promotion plan corresponds to one segment in the embodiment. However, a plurality of sales promotion plans may correspond to one segment. In a case where the plurality of sales promotion plans corresponds to one segment, the bonuses planned by the corresponding plurality of sales promotion plans are offered to the customer belonging to the involved segment. Even in this case, the plan codes and the participation conditions have a correspondence relationship. Specifically, the respective plurality of plan codes corresponding to one segment and the participation conditions have a correspondence relationship.

From here, hardware of the POS terminal 5 will be described. Fig. 8 is a block diagram showing a hardware configuration of the POS terminal 5. As shown in Fig. 8, the POS terminal 5 includes a processor 500. The processor 500 includes a CPU 51, a ROM 52, a RAM 53, a memory 54, and the like. The CPU 51 is a control main body. The ROM 52 stores a variety of control programs. The RAM 53 stores an expanded program and a variety of pieces of data. The memory 54 stores a variety of control programs and pieces of information. The CPU 51, the ROM 52, the RAM 53, and the memory 54 are connected each other via a bus 55. The CPU 51 expands a control program stored in the ROM 52 or the memory 54 to the RAM 53. The CPU 51 operates in accordance with the expanded control program to execute control processing of the POS terminal 5, as described later. Note that all or a part of the control program and information stored in the memory 54 may be stored in the ROM 52. In this case, the ROM 52 functions as the memory 54.

The RAM 53 includes a customer code section 531 and a product data section 532. The customer code section 531 stores the customer code inputted, for example, from a card reading device 61. The product data section 532 stores product information (product name, product price, etc.) of a product on which the sales registration processing is performed. The sales registration processing is performed on the basis of the product code acquired from the code symbol read by a code reader 30.

The memory 54 includes the non-volatile memory that holds stored information even if it is turned off such as the HDD (Hard Disc Drive) and the flash memory. The memory 54 includes a control program section 541, a sales data section 542, and a customer master data section 543. The control program section 541 stores a control program that controls the POS terminal 5.

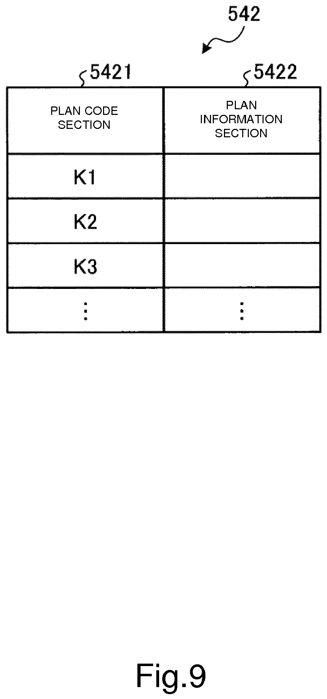

Fig. 9 shows a memory configuration of the plan data section 542. As shown in Fig. 9, the plan data section 542 stores the contents of the sales promotion plan for each sales promotion plan received from the headquarters server 1 via the shop server 3. The plan data section 542 includes a plan code section 5421 and a plan information section 5422. The plan code section 5421 stores the plan code that specifies the sales promotion plan. The plan information section 5422 stores the contents of the sales promotion plan shown by the involved plan code in association with the plan code. The contents of the sales promotion plan are pieces of the sales promotion information including the information about the bonus offered to the customer. The information about the bonus includes the number of points offered to the customer, for example. The information stored in the plan data section 542 is periodically (e.g., once a day) received from the headquarters server 1 via the shop server 3 and is updated to the latest information.

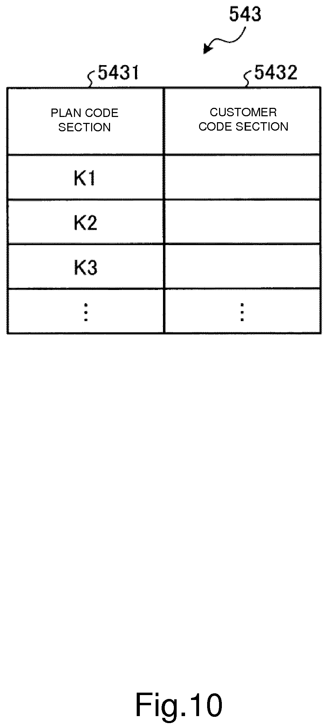

Fig. 10 shows a memory configuration of the target customer data section 543. As shown in Fig. 10, the target customer data section 543 stores the plan code and the customer code. The plan code is received from the headquarters server 1 via the shop server 3. The customer code is the customer code that specifies the customer to which the bonus of the involved sales promotion plan is offered corresponding to the involved plan code, and is received from the headquarters server 1 via the shop server 3. The target customer data section 543 includes a plan code section 5431 and a customer code section 5432. The plan code section 5431 stores the plan code that specifies the sales promotion plan. The customer code section 5432 stores the customer code that specifies the customer to which the bonus is offered on the basis of the sales promotion plan of the involved plan code in association with the plan code. The customer code section 5432 may store the customer code that specifies the plurality of customers in association with the plan code. The plan code stored in the target customer data section 543 and the customer code corresponded to the involved plan code are periodically (e.g., once a day) received from the headquarters server 1 via each shop server 3 and are updated to the latest information.

Description of Fig. 8 will be continued. In addition, the processor 500 is connected to an operation device 57, a display device for shop employee 58, a display device for customer 59, a printing device 60, a card reading device 61, and a code reader 62 via the bus 55 and a controller 56. The operation device 57 is a keyboard including a closing key 577. The closing key 577 is operated by a shop employee in a case where an end of the transaction with the customer is announced. The display device for shop employee 58 displays information for the shop employee. The display device for customer 59 displays information for the customer. The printing device 60 issues the receipt on which product information and payment information about the product, on which the payment processing has been performed, are printed. In addition, in a case where the bonus has been offered to the customer, the printing device 60 prints the sales promotion information including the contents of the bonus offered on the involved receipt. The card reading device 61 reads the customer code from a customer card owned by the customer. The POS terminal 5 accepts an input of the customer code read by the card reading device 61. The code reader 62 reads a symbol (code symbol such as bar code) attached to the product. The POS terminal 5 analyzes the read symbol and accepts the input of the acquire product code.

Note that the controller 56 controls the operation device 57, the display device for shop employee 58, the display device for customer 59, the printing device 60, the card reading device 61, and the code reader 62 by receiving an instruction from the processor 500. Incidentally, as a matter of description convenience, it describes that the control performed by the controller 56 is performed by the processor 500.

In addition, the processor 500 is connected to a communication device 63 via the bus 55. The communication device 63 is connected to other POS terminal 5 and the shop server 3 located at the shop via a communication line 4 so as to be capable of communicating with each other.

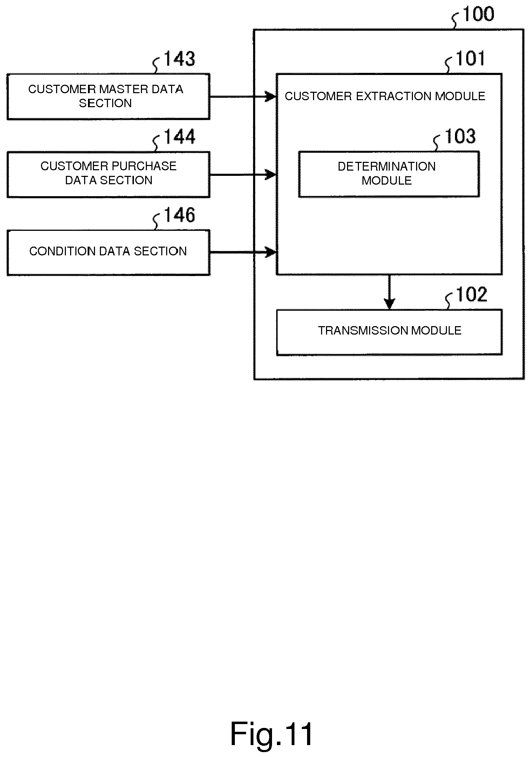

From here, a function configuration of the headquarters server 1 will be described. Fig. 11 is a function block diagram showing the function configuration of the headquarters server 1. The processor 100 of the headquarters server 1 functions as a customer extraction module 101 and a transmission module 102 by following the control program stored in the control program section 141.

The customer extraction module 101 searches the condition data section 146 on the basis of the attribute information about the customer stored in the customer master data section 143 and the purchase price information stored in the customer purchase data section 144. Then, the customer extraction module 101 extracts the customer code that specifies the customer satisfying the participation conditions from the customer master data section 143 for each plan code that specifies the sales promotion plan. In the embodiment, the customer code that specifies the customer satisfying the participation conditions stored in the condition data section 146 is extracted for each segment code. Since the segment code and the plan code have a correspondence relationship, it can be said that the customer extraction module 101 extracts the customer satisfying the participation conditions for each sales promotion plan. Specifically, the customer extraction module 101 extracts from the customer master data section 143 the customer code that specifies the customer satisfying the participation conditions for the sales promotion plan for each plan code on the basis of the attribute information (age group of age) of the customer stored in the attribute information section 1433 of the customer master data section 143, the total price of the purchase price stored in the purchase price section 1442 of the customer purchase data section 144, and the participation conditions stored in the condition data section 146 (attribute condition section 1462 and purchase condition section 1463).

Note that in a case where the customer extraction module 101 extracts the customer code that specifies the customer satisfying the participation conditions for each plan code, the determination module 103 of the customer extraction module 101 searches the condition data section 146 on the basis of the age group of the customer's age and the purchase price information about the involved customer. Then, the determination module 103 determines whether or not the customer satisfies the participation conditions for the sales promotion plan. Specifically, the determination module 103 determines whether or not the customer satisfies the participation conditions for the sales promotion plan on the basis of the attribute information about the age group of the customer's age stored in the attribute information section 1433 of the customer master data section 143, the total price of the purchase price stored in the purchase price section 1442 of the customer purchase data section 144, and the participation conditions stored in the condition data section 146 (attribute condition section 1462 and purchase condition section 1463). Then, the customer extraction module 101 extracts the customer code that specifies the customer satisfying the participation conditions for the plan code on the basis of a determination result.

The transmission module 102 transmits the extracted customer code and the plan code that specifies the sales promotion plan to the shop server 3 (external device) via the communication device 19 in association with each other. Specifically, the transmission module 102 transmits the customer code and the plan code to the shop server 3 in association with each other such that the sales promotion information (bonus) relating to the plan code is printable on the receipt on which the information about the product purchased by the customer is printed. Each shop server 3 receives the plan code and the customer code from the headquarters server 1. The shop server 3 transmits the received plan code and the received customer code to the POS terminal 5.

Note that the headquarters server 1 may transmit the customer code extracted as described above and the plan code that specifies the sales promotion plan to the information terminal (external devices) owned by the customer in association with each other. In this case, the transmission module 102 of the headquarters server 1 transmits the customer code and the plan code that are correlated with each other not to the shop server 3 but directly to the information terminal of the customer. Alternatively, the transmission module 102 transmits the customer code and the plan code that are correlated with each other to the information terminal of the customer via the shop server 3. Here, the information terminal includes a mobile terminal, a smartphone, a PC (Personal Computer), and the like owned by the customer.

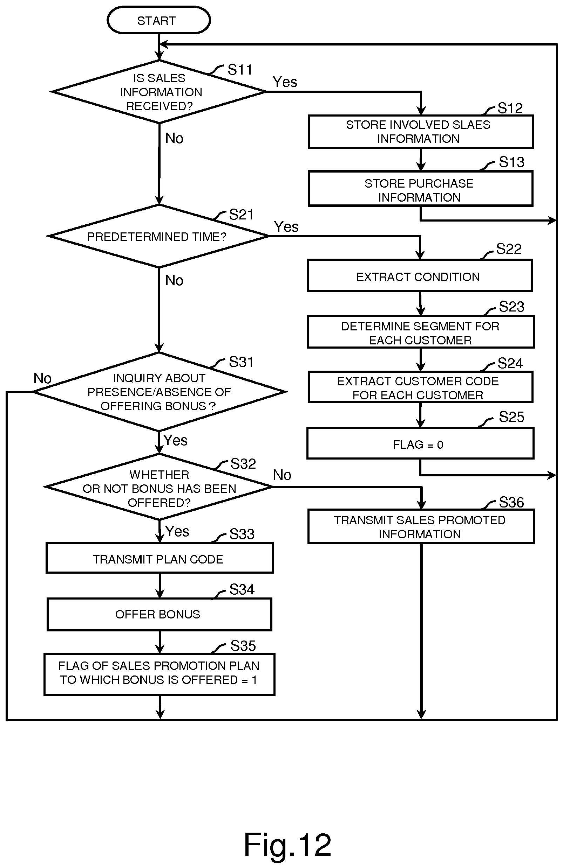

From here, the control processing of the headquarters server 1 will be described. Fig. 12 is a flowchart showing the control processing of the headquarters server 1. As shown in Fig. 12, in Step S11, the processor 100 of the headquarters server 1 determines whether or not the sales information (see Step S68 of POS terminal 5) is received from the shop server 3. In a case where the processor 100 determines that the sales information is received from the shop server 3 (Yes in Step S11), the processing of the processor 100 proceeds to Step S12. In Step S12, the processor 100 cumulatively stores the involved sales information to the sales data section 142. Next, in Step S13, the processor 100 calculates the purchase price for each customer on the basis of the received sales information. Specifically, the processor 100 calculates the purchase price for each customer on the basis of a payment price of the customer included in the payment information or the total price of the product for each customer code included in the sales information. Then, the processor 100 adds the calculated purchase price for each customer to the total price of the purchase price stored in the purchase price section 1442 of the customer purchase data section 144 and stores it as a new total price of the purchase price (purchase price information). Then, after the processing in Step S13, the processing of the processor 100 returns to Step S11.

In addition, in a case where the processor 100 determines that the sales information is not received from the shop server 3 (No in Step S11), the processing of the processor 100 proceeds to Step S21. In Step S21, the processor 100 determines whether or not it reaches a predetermined time (for example, predetermined time at the beginning of every month). In a case where the processor 100 determines that it reaches the predetermined time (Yes in Step S21), the processing of the processor 100 proceeds to Step S22. In Step S22, the processor 100 extracts the information about the involved customer for each customer. Specifically, the processor 100 extracts the attribute information (attribute information showing age) about the involved customer for each customer from the attribute information section 1433 and extracts the purchase price information from the purchase price section 1442. The purchase price information is the total price of the purchase price of the customer within the sales promotion period, as described above. Next, in Step S23, the processor 100 (determination module 103 included in customer extraction module 101) compares the attribute information and the purchase price information about the extracted customer with the participation conditions (attribute condition information and purchase price condition information) stored in the attribute condition section 1462 and the purchase condition section 1463 of the condition data section 146 for each customer. The processor 100 determines whether or not there is a segment that satisfies the participation conditions for each customer on the basis of the comparison result. Then, the processor 100 decides the segment that satisfies the participation conditions for each customer. Then, in Step S24, the processor 100 (customer extraction module 101) extracts the customer code that specifies the customer included in the involved segment for each segment from the customer master data 143. The processor 100 stores the extracted customer code to the customer code section 1472 of the target customer data section 147. Next, in Step S25, the processor 100 sets flag information about the involved customer corresponding to the involved plan code specified by the stored customer code stored in the sales promotion provision information section 1434 to flag 0. Then, after the processing in Step S25, the processing of the processor 100 returns to Step S11.

As described above, the headquarters server 1 executes the processing in Steps S22 to S25 when the predetermined time comes. Accordingly, the headquarters server 1 updates and extracts the customer to which the bonus is offered with respect to the sales promotion plan for each predetermined time. Specifically, the headquarters server 1 extracts the attribute information and the purchase price information about the customer for every predetermined time and newly decides the segment that satisfies the participation conditions for each customer.

In addition, in a case where the processor 100 determines that it is not the predetermined time (No in Step S21), the processing of the processor 100 proceeds to Step S31. In Step S31, the processor 100 determines whether or not an inquiry about presence/absence of the sales promotion plan that offers the bonus to the involved customer (see POS terminal 5 in Step S64) is received together with the customer code and the plan code from the POS terminal 5 via the shop server 3. In a case where the processor 100 determines that the inquiry about the presence/absence of the sales promotion plan that offers the bonus to the involved customer is not received together with the customer code and the plan code (No in Step S31), the processing of the processor 100 returns to Step S 11. In a case where the processor 100 determines that the inquiry about the presence/absence of the sales promotion plan that offers the bonus to the involved customer is received together with the customer code and the plan code (Yes in Step S31), the processing of the processor 100 proceeds to Step S32. In Step S32, the processor 100 determines whether or not the bonus with respect to the plan code received at the same time has been offered to the customer having the received customer code. In a case where the flag information stored in the sales promotion provision information section 1434 has the flag 0 corresponding to the receive plan code, the processor 100 determines that the bonus with respect to the involved sales promotion plan is not yet offered. In a case where the flag information stored in the sales promotion provision information section 1434 has the flag 1, the processor 100 determines that the bonus with respect to the involved sales promotion plan is already offered.

In a case where the processor 100 determines that the bonus with respect to the received sales promotion plan is not yet offered (Yes in Step S32), the processing of the processor 100 proceeds to Step S33. In Step S33, the processor 100 (transmission module 102) transmits the plan code of the sales promotion plan not offering the bonus to the POS terminal 5 via the shop server 3. Then, in Step S34, the processor 100 offers the bonus to the customer with respect to the sales promotion plan specified by the involved plan code. For example, the processor 100 offers points corresponding to the involved sales promotion plan. Offering the points to the customer is performed by transmitting the customer code and the number of points to be offered to a point server (not shown). Then, in Step S35, the processor 100 changes the flag information to the flag 1 and stores it, the frag being stored in the sales promotion provision information section 1434 with respect to the sales promotion plan of the plan code offering the bonus. Then, after the processing in Step S35, the processing of the processor 100 returns to Step S11.

In a case where the processor 100 determines that the bonus with respect to the sales promotion plan that the received plan code specifies is already offered (No in Step S32), the processing of the processor 100 proceeds to Step S36. In Step S36, the processor 100 transmits the sales promoted information with respect to the sales promotion plan corresponding to the received plan code to the POS terminal 5 via the shop server 3 (see POS terminal 5 in Step S69). The sales promoted information is information showing that the bonus has been already offered to the customer. Then, after the processing in Step S36, the processor 100 returns to Step S11.

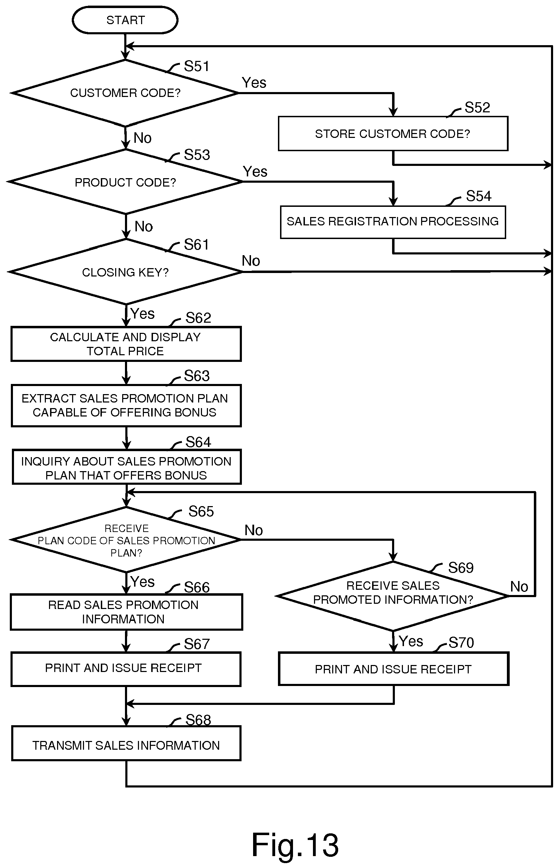

From here, the control processing of the POS terminal 5 will be described. Fig. 13 is a flowchart showing the control processing of the POS terminal 5. As shown in Fig. 13, in Step S51, the processor 500 of the POS terminal 5 determines whether or not the input of the customer code from the card reading device 61 is accepted. In a case where the processor 500 determines that the input of the customer code is accepted (Yes in Step S51), the processing of the processor 500 proceeds to Step S52. In Step S52, the processor 500 stores the accepted customer code to the customer code section 531. Then, after the processing in Step S52, the processing of the processor 500 returns to Step S51.

In a case where the controller determines that the input of the customer code is not accepted (No in Step S51), the processing of the processor 500 proceeds to Step S53. In Step S53, the processor 500 determines whether or not the product code is acquired on the basis of a symbol read by the code reader 62. In a case where the processor 500 determines that the product code is acquired (Yes in Step S53), the processing of the processor 500 proceeds to Step S54. In Step S54, the processor 500 executes the sales registration processing on the acquired product code and stores the product information to the product data section 532. Then, after the processing in Step S54, the processing of the processor 500 returns to Step S51.

In a case where the processor 500 determines that the product code is not acquired (No in Step S53), the processing of the processor 500 proceeds to Step S61. In Step S61, the processor 500 determines whether or not the closing key 577 is operated. In a case where the processor 500 determines that the closing key 577 is operated (Yes in Step S61), the processing of the processor 500 proceeds to Step S62. In Step S62, the processor 500 executes the payment processing on the basis of the product information stored in the product data section 532 and calculates the total price of the purchase price of the customer in the transaction at this time. The processor 500 displays the calculated total price of the purchase price on the display device for shop employee 58 and the display device for customer 59.

Next, in Step S63, the processor 500 searches the target customer data section 543 on the basis of the customer code stored in the customer code section 531. The processor 500 determines whether or not there is the plan code corresponding to the involved customer code. In a case where there is the plan code corresponding to the involved customer code, the processor 500 extracts the sales promotion plan of the corresponded plan code. Then, in Step S64, the processor 500 inquires of the headquarters server 1 via the shop server 3 whether or not the bonus of the sales promotion plan of the extracted plan code is already offered to the involved customer. Specifically, the processor 500 transmits the inquiry about presence/absence of the sales promotion plan that offers the bonus to the involved customer to the headquarters server 1 via the shop server 3 together with the customer code and the plan code.

Next, in Step S65, the processor 500 determines whether or not the plan code transmitted from the headquarters server 1 (see headquarters server 1 in Step S33), i.e., the plan code that specifies the sales promotion plan not offering the bonus, is received with respect to the inquiry (Step S63). In a case where the processor 500 determines that the plan code that specifies the sales promotion plan not offering the bonus is received (Yes in Step S65), the processing of the processor 500 proceeds to Step S66. In Step S66, the processor 500 reads the sales promotion information including the bonus stored in the plan information section 5422 (see Fig. 9) corresponding to the received plan code from the plan information section 5422 of the plan data section 542. Then, in Step S67, the processor 500 drives the printing device 60 and issues a sales promotion receipt on which the sales promotion information including the offered bonus read is printed. Then, in Step S68, the processor 500 transmits the sales information involved in the transaction to the shop server 3 (see headquarters server 1 in Step S11). Then, after the processing in Step S67, the processing of the processor 500 returns to Step S51.

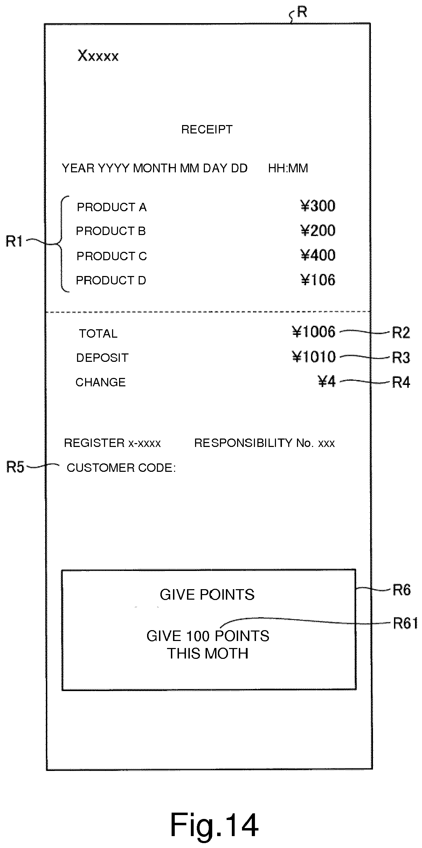

Fig. 14 shows a printed example of a receipt R issued from the processor 500 of the POS terminal 5 by the processing in Step S67. As shown in Fig. 14, the receipt R prints product information R1 about the product to which the payment processing is done, a total price R2 of the purchase price, a deposit amount R3 from the customer, and a change amount R4 calculated on the basis of the total price of the purchase price and the deposit amount. In addition, the receipt R prints a customer code R5 and sales promotion information R6. The customer code R5 is a customer code that specifies the customer stored in Step S52. The sales promotion information R6 is received from the headquarters server 1 via the shop server 3 and includes information R61 that offers the bonus (e.g. 100 points in Fig. 14).

In Step S65, in a case where the processor 500 determines that the plan code that specifies the sales promotion plan not offering the bonus (No in Step S65), the processing of the processor 500 proceeds to Step S69. In Step S69, the processor 500 determines whether or not the sales promoted information is received from the headquarters server 1 via the shop server 3 (see Step S36 of headquarters server 1). In a case where the processor 500 determines that the sales promoted information is received (Yes in Step S69), the processing of the processor 500 proceeds to Step S70. In Step S70, the processor 500 prints and issues the receipt on which the sales promotion information showing that the bonus is offered is not printed. Then, the processor 500 executes the processing of Step S68 described above.

Note that the processor 500 determines that the sales promoted information is not received (No in Step S69), the processing of the processor 500 returns to Step S65. In addition, in Step S61, in a case where the processor 500 determines that the closing key 577 is not operated (No in Step S61), the processing of the processor 500 returns to Step S51.

According to the embodiment, the headquarters server 1 extracts the customer code for each predetermined period that specifies the customer satisfying the participation conditions within the sales promotion period for each sales promotion plan. Then, the headquarters server 1 offers the bonus to the customer. Thus, it becomes possible to carry out the similar sales promotion plan repeatedly.

Furthermore, the headquarters server 1 does not offer the bonus of the same sales promotion plan to the customer again to which the bonus is offered within the sales promotion period (period during which bonus is offered). Thus, it is possible to prevent the excessive bonus from offering to the customer.

For example, in the embodiment, the headquarters server 1 is described as the information processing apparatus. However, not limiting thereto, the shop server 3 may be the information processing apparatus, for example.

Note that the control program executed at the headquarters server 1 in the embodiment is provided by storing to a computer-readable recording medium such as a CD-ROM, a flexible disc (FD), a CD-R, and a DVD (Digital Versatile Disk) in an installable or executable file format.

Alternatively, the program executed at the headquarters server 1 according to the embodiment may be provided by storing to a computer connected to a network such as the Internet and downloading via the network. Furthermore, the program executed at the headquarters server 1 according to the embodiment may be provided or distributed via the network such as the Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing apparatus that manages a sales promotion plan about a product and provides an external device with information about the sales promotion plan, comprising:
a communication device configured to communicate with the external device in order to provide the external device with the information about the sales promotion plan;
a memory including
a customer master data section that stores attribute information showing a customer attribute in association with customer specific information specifying the customer,
a customer purchase data section that stores purchase price information showing a purchase price of the product purchased by the customer in association with the customer specific information, and
a condition data section that stores attribute condition information showing a condition of the customer attribute and purchase price condition information showing a condition of the purchase price of the customer in association with each piece of plan specific information specifying a plurality of the sales promotion plans as participation conditions of the customer for the plurality of sales promotion plans; and
a processor configured to
searche the condition data section on a basis of the attribute information about the customer stored in the customer master data section and the purchase price information about the customer stored in the customer purchase data section,
extract the customer specific information specifying the customer satisfying the participation conditions from the customer master data section for each piece of the plan specific information on a basis of a search result, and
transmit the extracted customer specific information and the extracted plan specific information to the external device in association with each other via the communication device.

2. The information processing apparatus according to claim 1, wherein
the customer master data section stores information about a customer's age as the attribute information about the customer in association with the customer specific information, and
the condition data section stores the information about a customer's age group as the attribute condition information in association with the plan specific information.

3. The information processing apparatus according to claim 1 or 2, wherein
the processor is configured to transmit the customer specific information and the plan specific information to the external device such that information showing a bonus relating to the sales promotion plan offered to the customer is printable on a receipt on which the information about the product purchased by the customer is printed by the external device.

4. The information processing apparatus according to claim 1 or 2, wherein
the communication device is further capable of communicating with an information terminal owned by the customer, and
the processor is configured to transmit the customer specific information (customer code) and the plan specific information (plan code) to the information terminal via the communication device such that information showing a bonus relating to the sales promotion plan offered to the customer is displayable on the information terminal.

5. The information processing apparatus according to claim 3 or 4, wherein
the processor is configured not to transmit the customer specific information and the plan specific information to the external device in a case where the bonus has been offered to the customer.

6. An information processing method for an information processing apparatus that manages a sales promotion plan about a product and provides an external device with information about the sales promotion plan, comprising:
storing attribute information showing a customer attribute in a customer master data section of a memory in association with customer specific information specifying the customer;
storing purchase price information showing a purchase price of the product purchased by the customer in a customer purchase data section of the memory in association with the customer specific information;
storing attribute condition information showing a condition of the customer attribute and purchase price condition information showing a condition of the purchase price of the customer in a condition data section of the memory in association with each piece of plan specific information specifying a plurality of the sales promotion plans as participation conditions of the customer for a plurality of the sales promotion plans;
searching the condition data section on a basis of the attribute information about the customer stored in the customer master data section and the purchase price information about the customer stored in the customer purchase data section;
extracting the customer specific information specifying the customer satisfying the participation conditions from the customer master data section for each piece of the plan specific information on a basis of a result of the searching; and
transmitting the extracted customer specific information and the extracted plan specific information to the external device in association with each other via the communication device.

7. The information processing method according to claim 6, wherein
storing the attribute information includes storing information about a customer's age as the attribute information about the customer in association with the customer specific information, and
storing the attribute condition information includes storing the information about a customer's age group as the attribute condition information in association with the plan specific information.

8. The information processing method according to claim 6 or 7, wherein
transmitting the extracted customer specific information and the extracted plan specific information includes transmitting the customer specific information and the plan specific information to the external device such that information showing a bonus relating to the sales promotion plan offered to the customer is printable on a receipt on which the information about the product purchased by the customer is printed by the external device.

9. The information processing method according to any one of claims 6 or 7, wherein
transmitting the extracted customer specific information and the extracted plan specific information includes transmitting the customer specific information (customer code) and the plan specific information (plan code) to an information terminal owned by the customer such that information showing a bonus relating to the sales promotion plan offered to the customer is displayable on the information terminal.

10. The information processing method according to claim 8 or 9, wherein
transmitting the extracted customer specific information and the extracted plan specific information includes not transmitting the customer specific information and the plan specific information to the external device in a case where the bonus has been offered to the customer.

11. A computer program comprising instructions which, when the program is executed by a computer, cause the computer to carry out the steps of the method according to any one of claims 6 to 10.

12. A computer-readable medium having stored thereon the computer program of claim 11.
